# DEMANDE DE BREVET EUROPEEN

(11) **EP 2 287 729 A1**
(43) Date de publication de la demande: **23.02.2011**
(21) Numéro de dépôt: 10179053.3
(22) Date de dépôt: 16.07.1999
(51) Int. Cl.: G06F 9/44

(54) **Système de téléchargement d'objets ou de fichiers pour mise à jour de logiciels**

(30) Priorité: 21.07.1998 FR 9809296
(62) Demande divisionnaire de: 99401785.3
(71) Demandeur: Touchtunes Music Corporation, Las Vegas, NV 89104 (US)
(72) Inventeur: Nathan, Guy, 91330, Yerres (FR); Dion, Dominique, Laval Québec H7L 4N8 (CA)
(74) Mandataire: Debay, Yves

(57) **Abrégé**

La présente invention concerne un procédé de transfert de fichiers vers un dispositif récepteur pour la mise à jour d'un système comportant un système d'exploitation **caractérisé en ce que** les différentes tâches sont réparties en une pluralité de modules, ces modules étant reliés par des liens dynamiques et comprenant également des librairies e liens dynamiques organisées selon une pluralité de niveaux de dépendance, le procédé comprenant :
- un envoi d'un fichier au dispositif de réception depuis une source de chargement à distance ;
- un contrôle des informations d'au moins une version minimale requise pour l'exécution du fichier ;
- une vérification que les fichiers existants requis pour l'exécution du fichier correspondent aux exigences des informations de la version minimale,
- un maintien d'une sauvegarde d'une version antérieure au nouveau fichier, et
- une modification d'un niveau d'exécution des fichiers du dispositif récepteur lors d'une mise à jour.

## Description

La présente invention concerne un système de téléchargement d'objets ou de fichiers pour mise à jour de logiciels, notamment pour les systèmes de reproduction audiovisuelle déclenchés par paiement de redevances, tels que juke-box ou autres appareils.

Il est connu dans l'art antérieur des dispositifs de téléchargement de système d'exploitation à travers un réseau tels que, par exemple par la demande de brevet britannique N° 2 231 180. Cette demande de brevet enseigne d'effectuer le chargement d'un premier calculateur lié à travers un réseau à un deuxième calculateur en chargeant un sous-ensemble du système d'exploitation dans la mémoire du premier calculateur, le sous-ensemble comprenant les commandes permettant la copie des fichiers, la création d'un répertoire, le formatage du disque ainsi que le fonctionnement d'une connexion à travers le réseau pour ensuite utiliser ce sous-ensemble pour transférer du second calculateur l'ensemble des fichiers de système d'exploitation sur le disque du premier calculateur.

Dans ce type de téléchargement, il convient d'effectuer le chargement de l'ensemble du système d'exploitation et de tous les fichiers du système d'exploitation. Ceci amène donc soit à limiter les téléchargements, soit à occuper, pendant des temps relativement longs, des systèmes de télécommunications pour effectuer des téléchargement dans le cas où les systèmes d'exploitation ou les fichiers associés doivent être renouvelés fréquement.

Il est également connu par le brevet américain N° 4 958 278 un système de téléchargement sur un terminal non pourvu de lecteur de disques.

Il est également connu par le brevet français N° 2 682 786 un autre procédé de téléchargement sur un terminal non pourvu de disque dur.

Enfin un dernier brevet européen N° 0 358 992 enseigne une méthode de téléchargement à travers un réseau de système d'exploitation ou de programmes exécutables sur un calculateur qui ne comporte pas de dispositif d'amorçage ou d'autres dispositifs contenant le programme exécutable. Un premier programme d'amorçage minimum est transféré dans un premier temps, puis ce premier programme d'amorçage minimum s'exécute, établit une liaison logique vers un disque du serveur et autorise l'ordinateur de requête à traiter le disque du serveur comme un dispositif d'amorçage local.

Le but de l'invention est d'une part, d'éviter la nécessité de réamorcer le terminal sur lequel on télécharge et d'autre part, de permettre de transférer des fichiers d'exploitation ou des parties de programme exécutable sans avoir à réinitiallser la machine, tout en étant sûr que le fonctionnement du système ne sera pas dégradé par la version téléchargée.

Ce but est atteint par le fait que l'architecture du système d'exploitation comporte une répartition des différentes tâches en modules logiciels reliés entre eux par des liens dynamiques ou constitués de sous-programmes exécutables, présentant des liens de dépendance principale avec d'autres parties du système d'exploitation, chacun des modules étant constitué de fichiers d'objets ou de librairies représentées par des librairies de liens dynamiques "dynamic links libraries" organisées entre elles selon une pluralité de niveaux de dépendance décrits dans leurs attributs respectifs.

Selon une autre particularité, les attributs d'un objet ou d'une librairie indiquent le numéro de version et les dépendances de l'objet par rapport à d'autres objets.

Selon une autre particularité, les attributs indiquent le niveau attribué aux modules.

Selon une autre particularité, les différentes tâches comprennent une tâche principale qui comporte un module (JUKECORE.DLL) qui est destiné à charger les librairies de liens dynamiques (DLL), à initialiser le noyau du programme, à initialiser le module de gestion des graphiques (GFX.DLL), à initialiser un module de chargement des librairies (WDLL.DLL);, à charger un module Télécom des tâches de télécommunications (TELECOM.DLL) et à lancer un programme d'interpréteur d'écran en tant que tâche principale.

Selon une autre particularité, le programme est subdivisé en un certain nombre de modules définissant chacun une tâche spécifique à un terminal équipé d'au moins un modem de télécommunication et d'une unité centrale.

Selon une autre particularité, cette tâche spécifique est celle correspondant à un juke-box et comporte une tâche principale spécifique, un certain nombre de modules, définissant les fonctions "fenêtres" de l'affichage, qui sont les suivants ;
- un module MOUSE.DJL d'exploitation des signaux souris ou de l'écran tactile;
- un module WMESSAGE.DJL d'exploitation des messages échangés entre les objets ;
- un module FIL.DJL de gestion des fichiers sur disques ;
- un module FILIO.DJL de lecture-écriture de fichiers sur disques ;
- un module JSTRUCT.DJL de surveillance de tous les événements générés par les équipements, tels que l'écran tactile, la carte son, l'interface de traitement des équipements monétaires.

Selon une autre particularité, la tâche principale spécifique de l'application juke-box comporte un module (SILOAD.DLL) contenant la librairie du programme chargeur, destinée à vérifier les versions de librairies de liens dynamiques requises, de les charger et d'appeler le module des tâches Télécom pour effectuer le transfert de fichiers.

Selon une autre particularité, ce module SILOAD.DLL comporte la liste dans un fichier (DLL.DEFAULT) des versions minimales nécessaires au fonctionnement ainsi que la liste de toutes les fonctions représentées, soit par des bibliothèques (DATA JUKEBOX LIBRARY), soit par des fichiers d'objets (DJO, DATA JUKEBOX OBJECT).

Selon une autre particularité, chaque objet ou bibliothèque contient la liste de toutes les fonctions, dont la bibliothèque ou l'objet a besoin, ainsi que les numéros de version et les dépendances.

Selon une autre particularité, le module WDLL.DLL comporte des moyens de gérer tous les nouveaux modules, de vérifier que les modules téléchargés n'ont aucune dépendance manquante et ont été chargés avec les versions nécessaires.

Selon une autre particularité, le module SILOAD.DLL comporte des moyens de gérer le chargement, des modules spécifiques à la tâche du terminal, à savoir tous les modules DJL déjà énumérés ainsi que les modules de librairie juke-box constitués par un module WOBJECT.DJL qui gère les objets, le mixeur, les achats ; un module WCURSOR.DJL qui gère les mouvements du curseur un module DBMAPI.DJL qui gère la base de donnée ; un module WFONTS.DJL qui gère tous les types de fonte ; un module PARSER.DLL (PARSER Programme d'analyse) qui analyse et génère les écrans à partir du script et vérifie la grammaire à l'aide d'un module "GRAMMAR.DJL"et d'un module lexique "LEXY.DJL".

Selon une autre particularité, le module de chargement de librairie SILOAD.DLL comporte un module "WINDEF" qui contient la liste des fichiers qu'il faut inclure pour gérer les fenêtres d'un affichage fenêtres prévu sur le moniteur du terminal de type juke-box.

Selon une autre particularité, cette liste d'objets est constituée :
- d'un module objet "OBJET WPSGREEN.DJO" qui permet de définir la page principale sur le moniteur ;
- d'un module "WSCREEN.DJO" qui permet de déterminer dans cette page principale le nombre d'écrans disponibles et ainsi permettre l'affichage de plusieurs fenêtres ou écrans ;
- d'un module "WIMAGE.DJO" qui permet de déterminer et de définir dans l'écran l'image qu'il utilisera ;
- d'un module 'WANIM.DJO" qui permet de définir l'animation lorsque l'image est animée ;
- d'un module "WBUTTON.DJO" qui permet de définir et gérer les boutons qui sont utilisés sur l'écran de la page principale ;
- d'un module "WLABEL.DJO" qui permet de créer des étiquettes permettant l'écriture par-dessus un objet ; et
- d'un module "WSCROLLER.DJO" qui permet de définir des zones d'affichage à défilement ? entre deux points par exemple, vertical, horizontal, diagonal.

Selon une autre particularité, l'ensemble de ces modules d'objets gérés par la tâche principale, utilise une librairie "JHANDLER" qui permet, par des moyens, de définir les utilisations fixes des écrans et donc de déterminer quelles sont les interfaces qui assurent la liaison avec les différents objets définis par les modules précédents.

Selon une autre particularité, la tâche SILOAD.DLL comporte des moyens de lancer ou charger le module "XCP.DJP" permettant de gérer les tâches de paiement telles que les systèmes de réception de billets ou les unités de paiement à monnaie ou à carte et permet également la sauvegarde des informations de base dans le IBUTTON.

D'autres particularités et avantages de la présente invention apparaîtront plus clairement à la lecture de la description ci-après faite en référence aux dessins annexés dans lesquels :

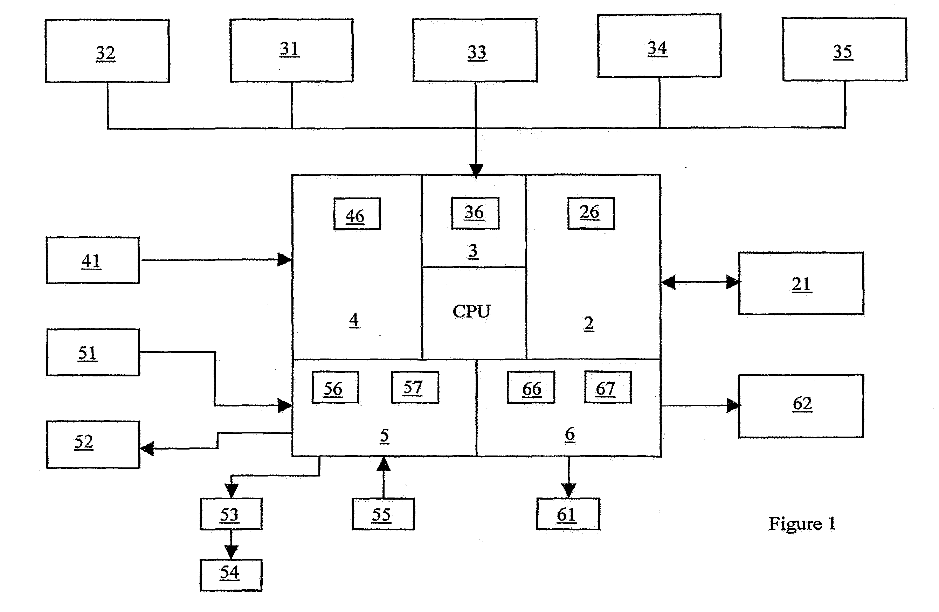

- la figure 1 représente une vue schématique du schéma électrique du matériel constituant l'intention,
- la figure 2 représente un logigramme des relations entre les modules de librairies et les modules d'objets.

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'étant porté sur un système du type Pentium qui possède des moyens de mémorisation et les caractéristiques suivantes:
- compatibilité avec le bus local Vesa,
- antémémoire de processeur: 256 kO minimum,
- mémoire vive: RAM de 32 MO
- ports série de haute performance,
- adaptateur graphique type SVGA à microprocesseur
- contrôleur de bus type SCSI/2,
- mémoire vive RAM statique auto-alimentée.

Toute autre unité centrale, possédant des performances équivalentes ou supérieures, pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse et un circuit (6) de commande des moyens de visualisation. Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,

Des moyens de mémorisation de masse (21), utilisant des disques durs de type SCSI haute vitesse et haute capacité, sont associés aux moyens de mémorisation déjà présents dans le dispositif à microprocesseur. Ces moyens servent au stockage d'informations audiovisuelles numérisées et compressées.

Un adaptateur de modem de télécommunications (41) haute vitesse est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) incorporant deux tampons mémoire (56, 57) et de type synthétiseur de musique prévu pour supporter un grand nombre de sources d'entrée tout en fournissant une sortie présentant une qualité de type CD (disque compact).

De même, le circuit de commande des moyens de visualisation comporte également deux mémoires tampon (66, 67) dans le but explicité ultérieurement.

Une alimentation thermiquement régulée de 240 watts ventilée fournit l'énergie au système. Cette alimentation est protégée contre les surintensités et les surosciliations.:

Le système de reproduction audiovisuelle gère, par le biais de son circuit contrôleur d'entrée (3), un écran tactile (33) qui inclut un panneau de revêtement de la vitre utilisant la "technologie avancée d'onde de surface" ainsi qu'un contrôleur de bus de type AT. Cet écran tactile permet après avoir affiché sur le moniteur vidéo (62) ou l'écran d'un téléviseur (61) diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface également le système avec un ensemble télécommande (31) constitué, par exemple, d'une télécommande RF à fréquence à radio.

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques ou à puces ou toute combinaison des moyens de paiement

Pour loger le système, il est de plus prévu un châssis ou bâti avec garnitures extérieures personnalisables.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun, de façon alternative, une information correspondant à environ au moins un quart de seconde de son. De même deux tampons (66, 67) sont associés au circuit contrôleur de vidéo (6) capables, chacun et alternativement, de mémoriser environ au moins un dixième de seconde d'image. Enfin un tampon respectif (46, 36, 26) est associé à chacun des circuits contrôleur de communication(4), d'interface d'entrée (3) et de mémorisation (2).

Le logiciel d'exploitation du système a été élaboré autour d'une librairie d'outils et de services très largement orientés vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonore de même que la gestion des liaisons de télécommunications au travers du réseau de distribution. De plus, ce logiciel présente une grande flexibilité

Le système d'exploitation est partagé en modules comportant un premier module d'amorçage (7) lui-même subdivisé en un premier module (70) de programme principal, appelé "JUK.EXE", qui vérifie la mémoire et vérifie si le minimum d'objets est présent pour assurer le fonctionnement du juke-box ; un second module (71) lié dynamiquement et dépendant de celui-ci est constitué par le module appelé "JUKECORE.DLL". La fonction de ce second module (71) est de contenir les librairies de langage C et d'assurer la tâche principale.

L'architecture du système d'exploitation comporte une répartition des différentes tâches en modules logiciels reliés entre eux par des liens dynamiques ou constitués de sous-programmes exécutables présentant des liens de dépendance principale avec d'autres parties du système d'exploitation. Chacun des modules est constitué de fichiers d'objets ou de librairies de liens dynamiques "dynamic links library" organisés selon une pluralité de niveaux de dépendance décrits dans les attributs. Les attributs d'un objet ou d'une librairie indiquent le numéro de version et les dépendances du fichier d'objet ou de la librairie par rapport à d'autres fichiers d'objets, comme décrit ci-après pour le module appelé PARSER.DJL. Chaque attribut indique le niveau attribué au module. Ainsi, le module JUK.EXE (70) est de niveau supérieur aux modules JUKECORE.DLL (71), TLS.DLL (72), CRDE.DLL (73), GFX.DLL (74), WDLL.DLL (75), JEEP.DLL (9) et TELECOM.DLL (10), mais le module TELECOM.DLL (10) est dépendant du module JEEP.DLL (9) (voir lien 910), donc de niveau inférieur au module JEEP.DLL (9).

De même, JEEP.DLL (9) (voir lien 759) est de niveau inférieur au module WDLL.DLL (75), car dépendant de celui-ci et TLS (lien 725) de niveau supérieur à WDLL (75). Par contre, les modules TLS.DLL et GFX.DLL peuvent être de même niveau. La tâche principale comporte un module (JUKECORE.DLL) destiné à initialiser ou charger le module (73), le noyau du programme appelé "CRDE.DLL", à initialiser ou charger le module (74) de gestion des graphiques (GFX.DLL), à initialiser ou charger le module (75) de chargement (WDLL.DLL) des librairies, à charger le module (10) Télécom des tâches de télécommunications (DLL), à charger le module (72) TLS.DLL qui contient toutes les utilisations nécessaires au juke-box, aux télécoms, heure, décryptage, etc ...., à initialiser ou charger la librairie des programmes JEEP.DLL (Juke Execution Exchange Protocol) assurant les tâches de serveur d'intégrité, de requête de chargement et le dialogue avec le serveur, et à lancer le module de programme (80, SILOAD.DLL) en tant que tâche principale. La tâche principale de l'application juke-box comporte le module (SILOAD.DLL) contenant la librairie du programme chargeur destinée à vérifier les versions de librairie à liens dynamiques requises dans le module de chargement des librairies (WDLL.DLL), de les charger ou d'appeler le module des tâches, Télécom pour effectuer le transfert de fichiers. Le module WDLL DLL comporte la liste dans un fichier (DLL.DEFAULT) des versions minimales nécessaires au fonctionnement ainsi que la liste de toutes les fonctions représentées soit par des bibliothèques (LIBRARY) (DLL, DJL), soit par des fichiers d'objets (DJO). Chaque objet ou bibliothèque contient la liste de toutes les fonctions, dont la bibliothèque ou l'objet a besoin, ainsi que les numéros de version et les dépendances. Le module de chargement des librairies WDLL.DLL assure la gestion de tous les nouveaux modules, s'assure des interdépendances et vérifie que les modules téléchargés n'ont aucune dépendance et ont été chargés avec les versions nécessaires. La partie applicative (8) propre à un juke-box comporte un certain nombre de modules chargés et lancés par le module SILOAD.DLL et définissant les fonctions "fenêtres" de l'affichage, qui sont les suivantes :
- un module (81) appelé MOUSE.DJL, d'exploitation des signaux souris ou de l'écran tactile ;
- un module (82) appelé WMESSAGE.DJL d'exploitation des messages échangés entre les objets et les différents autres modules ;
- un module (83) appelé FIL.DJL de gestion des fichiers sur disques ;
- un module (84) appelé FILIO.DJL, de lecture-écriture de fichiers sur disques ;
- un modules (85) appelé JSTRUCT.DJL, de surveillance de tous les événements générés par les équipements, tels que l'écran tactile, la carte son, l'interface de traitement des équipements monétaire,

Le module SILOAD.DLL gère le chargement, des modules spécifiques à la tâche du terminal, à savoir tous les modules DJL déjà énumérés ainsi que les modules de librairie juke-box (87) constitués par un module appelé WOBJEGT.DJL (870) qui gère les objets, tels que le mixeur, les achats ; un module appelé WCURSOR.DJL (871) qui gère les mouvements du curseur un module (872) appelé DBMAPI.DJL qui gère la base de donnée ; un module (873) appelé WFONTS.DJL qui gère tous les types de fonte un module (874) appelé PARSER.DJL (Programme d'analyse syntaxique) qui analyse et génère les écrans à partir du script et vérifie la grammaire à l'aide du module (876)appelé "GRAMMAR.DJL" et d'un module (875) appelé "LEXY.DJL" qui est le module lexique d'assignation des fonctions des mots à l'intérieur du langage. Le module PARSER.DJL (874) contient dans son en-tête de fichier les informations suivantes :

```
       - char *parser_version_info= "DLL_iNFO DJL;"
                                    "DLL-NAME PARSER.DJL;"
                                    "VERSION 1;"
                                    "CREATOR KENDALF;"
                                    "REQUlRIES lexyy.djl;4;"
                                    "REQUIRIES grammar-.djl;5";
```

Tous les modules et toutes les librairies (DJO, DLL, DJL) contiennent des informations semblables à celles du module PARSER.DJC et ces informations déterminent les nécessités de version et de dépendance.

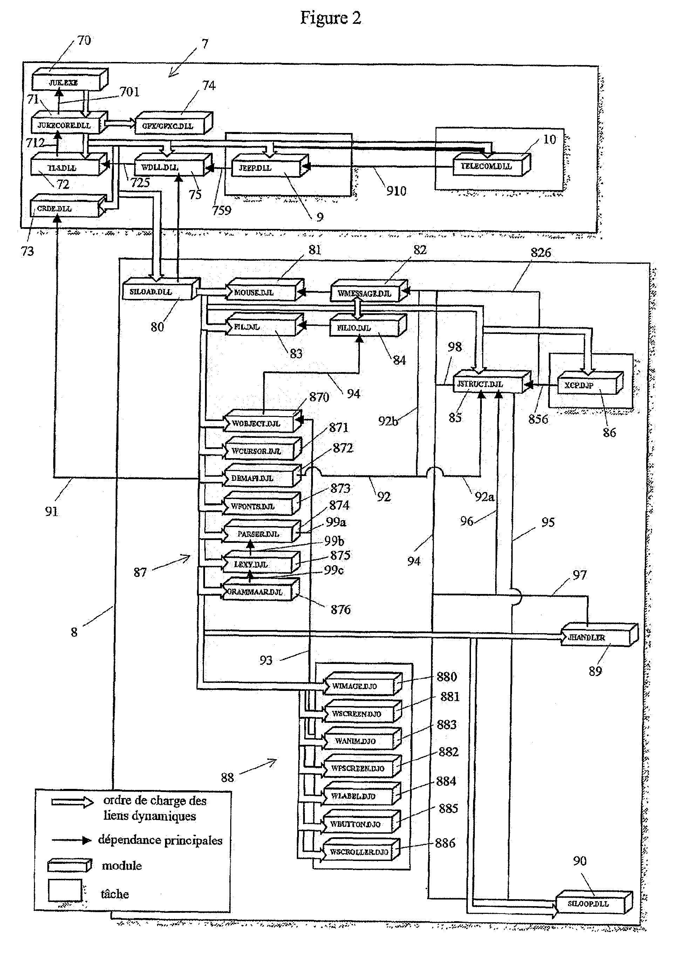

Ainsi, le module PARSER.DJL a besoin des modules LEXY.DJL version 4 et du module GRAMMAR version 5 pour permettre son exécution par le système. Les flèches doubles de la figure 2, reliant les différentes modules entre eux, donnent l'ordre de chargement des différents fichiers. Ainsi, comme on l'a vu précédemment, il faudra commencer par charger le module JUKE.EXE pour ensuite charger le module JUKECORE.DLL et pouvoir, à partir du module JUKECORE.DLL, charger les modules GFX.DLL, TLS.DLL, WDLL.DLL, JEEP.DLL, TELECQM.DI.L, CRDE.DLL et SILOAD.DLL.

Les flèches uniques représentent les dépendances entre modules. Ainsi, la flèche (91) indique que les fichiers DJL et en particulier, DBMAPI.DJL, sont dépendants de CRDE.DLL. La flèche (93) montre que les fichiers DJO sont dépendants du module WOBJECT.DJL. Le module WOBJECT.DJL est lui-même dépendant du module FILIO.DJL. La flèche (92a) indique que le module DBMAPI.DJL est dépendant du module JSTRUCT.DJL et la flèche (92b) le module DBMAPI.DJL, est dépendant du module WMESSAGE.DJL. La flèche (98) indique que le module JSTRUCT.DJL est dépendant du module WMESSAGE.DJL. Le module WMESSAGE.DJL est dépendant du module MOUSE.DJL et le module FILIO.DJL étant dépendant du module FIL.DJL. Le module XCP.DJP est dépendant, par la flèche (856), du module JSTRUCT.DJL et comme indiqué, par la flèche (826) du module WMESSAGE.DJL. Le module JHANDLER est dépendant, par la flèche (97), du module WMESSAGE.DJL et comme représenté, par la flèche (96) du module JSTRUCT.DJL. Le module SILOOP.DLL est dépendant, comme représenté par la flèche (95), du module JSTRUCT.DJL et par la flèche (94) du module WMESSAGE.DJL. Le module TELECOM.DLL est dépendant, comme indiqué par la flèche (910), du module JEEP.DLL qui est lui-même dépendant, comme montré par la flèche (959), du module WDLL.DLL. Le module WDLL.DLL est dépendant, par la flèche (725), du module TLS.DLL. De même, la flèche (89c) montre que le module GRAMMAR.DJL est dépendant du module LEXY.DLL et, par la flèche (99b), que le module LEXY.DJL est dépendant du module PARSER.DJLL. Ainsi, comme on a pu le voir précédemment, le module PARSER.DJL a besoin du module LEXY.DJL et du module GRAMMAR pour s'exécuter et la version 1 du module PARSER.DJL fait appel à la version 4 du module LEXY.DJL et à la version 5 du module GRAMMAR.DJL. De même, le module WOBJECT.DJL est dépendant par la flèche (99a) du module PARSER.DJL. Ainsi, tous les modules et toutes les librairies .DJO, .DLL, .DJL contiennent des informations semblables à celles du module PARSER:DJL qui déterminent les nécessités de version des différents modules dont un module donné est dépendant. Ces informations donnent également les dépendances du module vis-à-vis des autres modules, comme cela est indiqué par les flèches sur la figure 2.

Le module de chargement de librairie SILOAD.DLL charge également ou lance un module SILOOP.DLL (90) qui est une bande d'attente d'événement. Un ensemble de modules (88) contient la liste des fichiers qu'il faut inclure pour gérer les fenêtres d'un affichage fenêtres prévu sur le moniteur du terminal de type juke-box.

Cette liste d'objets est constituée :
- d'un fichier d'objets (883) "WPSCREEN.DJO" qui permet de définir la page principale sur le moniteur ;
- d'un fichier d'objets (881) "WSCREEN.DJO" qui permet de déterminer dans cette page principale le nombre d'écrans disponibles et ainsi permettre l'affichage de plusieurs fenêtres ou écrans ;
- d'un fichier d'objets (880) "WIMAGE.DJO" qui permet de déterminer et de définir dans l'écran l'image qu'il utilisera ;
- d'un fichier d'objets (882) "VüANIM.DJ4" qui permet de définir l'animation lorsque l'image est animée ;
- d'un fichier d'objets (885) "WBUTTON.DJO" qui permet de définir et gérer les boutons qui sont utilisés sur l'écran de la page principale tels que les boutons d'actionnement utilisés dans l'interface graphique définie dans la demande de brevet PCT WO 96/12258 ;
- d'un fichier d'objets (884) "WLABEL.DJO" qui permet de créer des étiquettes permettant l'écriture par-dessus un objet ; et
- d'un fichier d'objets (886) "WSCROLLER.DJO" qui permet de définir des zones d'affichage à défilement vertical.

Une librairie appelée "JHANDLER" permet de définir les utilisations fixes des écrans et donc, de déterminer quelles sont les interfaces qui assurent la liaison avec les différents objets définis par les modules précédents.

Le module (86) de librairie "XCP.DJP" permet de gérer les tâches de paiement telles que les systèmes de réception de billets ou les unités de paiement à monnaie ou à carte et permet également la sauvegarde des informations de base dans le IBUTTON qui est un circuit intégré de mémorisation de codés secrets pour l'utilisateur.

Ainsi, lorsqu'un nouveau fichier est envoyé par téléchargement au système, le fichier comporte des informations sur son niveau qui dépend du type de fichier. Les fichiers des images graphiques, par exemple WIMAGE.DJO, ont les niveaux les plus élevés et les fichiers de gestion des parties Hardware, tels que, par exemple XCP.DJP, ont les niveaux les plus bas. Le module JEEP.DLL vérifie la logique de dépendance en commençant par les fichiers de niveau les plus bas et en remontant vers les fichiers supérieurs tout en s'assurant que les dépendances nécessaires entre les fichiers ou librairies sont respectées, De cette façon, une modification dans le module WOBJECT.DJL va amener le module JEEP.DLL à vérifier que les informations de version nécessaires au module WOBJECT.DJL pour les fichiers DJO dépendants et nécessaires à son exécution correspondent aux versions minimales requises par les informations inscrites dans le fichier WOBJECT.DJL. Ainsi, si le module WOBJECT.DJL nécessite une version déterminée du module WPSCREEN.DJO, il vérifiera que cette version est au minimum présente et s'il n'y a qu'une version de niveau insuffisant, il signalera un problème, puis le module JEEP.DLL remontera les liens de dépendance vers les modules FILIO.DJL et FIL.DJL.

L'organisation du disque dur du Juke box est effectuée de façon à comporter un répertoire C:\NEWJUKE qui continent les nouveaux fichiers Juke box lorsqu'on télécharge de nouveaux modules. Un autre fichier C:\OLDJUKE contient la sauvegarde des versions stables des fichiers et modules nécessaires au fonctionnement du Juke box. Le module JEEP.DLL (JUKE EXECUTION EXCHANGE PROTOCOL) contient un gestionnaire automatique de fichiers qui conserve la trace des modules et fichiers mis à jour en sauvegardant les fichiers anciens pendant un certain temps et en déplaçant les nouveaux fichiers dans le répertoire NEWJUKE. Cette tâche enregistre également les fichiers sur les pistes du disque en cas d'incident soudain pendant l'opération de téléchargement. Le module JEEP.DLL contient également un gestionnaire de redémarrage dont la responsabilité est de changer les niveaux d'exécution des fichiers du Juke box une fois que le gestionnaire automatique de fichiers a déterminé qu'une mise à jour du Juke box s'était produite. Le module JEEP.DLL génère également un fichier MISDEPS.DAT, lorsque la détection d'une dépendance manquante a été faite. Ce fichier contient des lignes de la forme NEEDPARSER.DLL - version 2.0 ; NEEDLEXY.DLL → version 2.0, etc, ....... Ce fichier permet au serveur par lecture de ce fichier MISDEPS.DAT de déterminer les modules sur le juke box et de les recharger.

## Revendications

1. Procédé de transfert de fichiers vers un dispositif récepteur pour la mise à jour d'un système comportant un système d'exploitation **caractérisé en ce que** les différentes tâches sont réparties en une pluralité de modules, ces modules étant reliés entre eux par des liens dynamiques et comprenant également des librairies représentées par des librairies de liens dynamiques organisées entre elles selon une pluralité de niveaux de dépendance, le procédé comprenant :
- une étape d'envoi d'un nouveau fichier au dispositif de réception depuis une source de chargement à distance ;
- une étape de contrôle des informations d'au moins une version minimale requise pour l'exécution du nouveau fichier ;
- une étape de vérification que tous les fichiers existants requis pour l'exécution du nouveau fichier correspondent aux exigences des informations de la version minimale,
- une étape de maintien d'une sauvegarde d'une version antérieure au nouveau fichier, et
- une étape de modification d'un niveau d'exécution des fichiers du dispositif récepteur lorsqu'une mise à jour a été accomplie.

2. Procédé de transfert de fichiers selon la revendication 1, **caractérisé en ce que** l'étape de vérification comprend :
- une étape de vérification, à partir de plus bas niveau de dépendance associée au nouveau fichier, que tous les fichiers existants nécessaires à l'exécution dudit nouveau fichier correspondent aux exigences de la version minimale des informations,
et comprend en outre :
- une étape de répétition de l'étape de vérification jusqu'à ce qu'un plus haut niveau de dépendance associée au nouveau fichier est atteint.

3. Procédé de transfert de fichiers selon la revendication 1, **caractérisé en ce que** le procédé comprend en outre :
- une étape de génération d'un fichier quand l'absence d'une dépendance est détectée, l'absence de cette dépendance étant déterminée par l'échec de l'étape de vérification qu'un fichier existant correspond aux exigences de la version minimale des informations.

4. Procédé de transfert de fichiers selon la revendication 3, comprenant en outre :
- une étape de lecture par la source de chargement à distance du fichier généré, et
- une étape d'envoi d'un ou de plusieurs nouveaux fichiers, correspondant aux fichiers à partir de laquelle l'absence de cette dépendance a été déterminée.
